(19) Europäisches Patentamt
European Patent Office
Office européen des brevets

(11) **EP 3 039 401 B1**

(12) **EUROPEAN PATENT SPECIFICATION**

(45) Date of publication and mention
of the grant of the patent:
**25.11.2020 Bulletin 2020/48**

(21) Application number: **14757912.2**

(22) Date of filing: **27.08.2014**

(51) Int Cl.:
*G01N 11/08* (2006.01)      *G01N 11/00* (2006.01)

(86) International application number:
**PCT/EP2014/068187**

(87) International publication number:
**WO 2015/028517 (05.03.2015 Gazette 2015/09)**

(54) **DEVICE FOR A LIQUID PROCESSING SYSTEM**

VORRICHTUNG FÜR EIN FLÜSSIGKEITSBEHANDLUNGSSYSTEM

DISPOSITIF POUR SYSTÈME DE TRAITEMENT DE LIQUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2013 SE 1350984**

(43) Date of publication of application:
**06.07.2016 Bulletin 2016/27**

(73) Proprietor: **Tetra Laval Holdings & Finance S.A.
1009 Pully (CH)**

(72) Inventors:
• **SKOGLUND, Tomas
226 54 Lund (SE)**

• **JÖNSSON, Jesper
247 55 Dalby (SE)**

(74) Representative: **Tetra Pak - Patent Attorneys SE
AB Tetra Pak
Patent Department
Ruben Rausings Gata
221 86 Lund (SE)**

(56) References cited:
**EP-A2- 2 420 818        WO-A1-01/55696
CN-U- 203 132 951        US-A- 4 680 957
US-A1- 2014 005 957      US-B1- 6 196 058**

**EP 3 039 401 B1**

**Description**

Technical Field

The present invention relates to a device for a liquid processing system. More particularly, the present invention relates to a device for determining rheological properties of a liquid flowing through a liquid processing system.

Background

In liquid processing, in particular liquid food processing, it is often desired to monitor the operation in order to obtain data being correlated to the actual treatment of the liquid. For example, liquid food is normally subjected to various processing steps such as heating, mixing, separation, etc. in order to provide treatment to the liquid food, which treatment is necessary to achieve the required properties for the final liquid product. By monitoring the operation of the process it is possible to accurately determine the status of the liquid processing system whereby faults may be detected and the quality of the final product may be ensured.

Especially in liquid food processing changes in raw material may occur rather frequently, which changes do not necessarily provide a significant impact on the operation on the processing equipment, however they may lead to undesired changes in the final product itself. One such example is when manufacturing tomato sauces or purees, wherein a change of raw material from one batch of tomatoes having a high amount of sugar to another batch with a less amount of sugar will cause the viscosity of the final product to change.

Traditionally viscometers or rheometers may be used to address this problem, whereby a sample is withdrawn from the liquid processing system and analyzed in the metering equipment for revealing any changes in the final product. Should such change in viscosity be detected, an operator may adjust the operating parameters of the liquid processing equipment accordingly, or even stop the processing equipment for replacing the raw material used. Such monitoring of the viscosity is very time consuming and requires the need for a skilled operator, not only for extracting samples but also for evaluating the results and making necessary decisions. A further drawback with this method is associated with the fact that for hygienic applications, an extracted sample must be discarded after testing leading to unwanted losses of the liquid to be processed.

It becomes even more complicated when the liquid to be processed is a non-Newtonian fluid, whereby the viscosity is in fact dependent on the shear rate or the shear rate history. Analyzing the rheological parameters alone will in those cases not be enough, since the rheological parameters may change depending on the shear rate caused by the processing equipment such as pumps, homogenizers, centrifugal separators, etc.

Hence, there is a need for an improved device for a liquid processing system, providing data which allows accurate in-line monitoring of the actual product.

Known devices in the art for monitoring the rheological properties of a liquid are disclosed in EP 2420818 A2 and CN 203132951 U.

Summary

It is, therefore, an object of the present invention to overcome or alleviate the above described problems.

The basic idea is to provide a device for a liquid processing system, in which the liquid being processed is represented by the power law model, and which method and device provides an in-line determination of the consistency ($K$) and the flow behaviour index (n) of the liquid being processed.

According to a first aspect of the invention a device according to claim 1 is provided.

Preferably, the liquid is a non-Newtonian fluid whereby the device provides continuous data of the consistency and the flow behaviour index representing the rheological parameters of the liquid for further improving process control for such liquids.

The geometry being associated with the first flow of liquid is different from the geometry being associated with the second flow of liquid. Hence, the consistency and the flow behaviour index may be determined at a specific time thus reducing measurement errors caused by time variances in the process.

In other examples not part of the invention, the geometry being associated with the first flow of liquid is equal to the geometry being associated with the second flow of liquid, and the flow rate and/or the pressure drop being associated with the first flow of liquid is different from the flow rate and the pressure drop being associated with the second flow of liquid. This is advantageous in that although it is necessary to perform measurements for the same geometry but for different pressure drop and different flow rate, the device may be made much smaller with a reduced number of sensors.

Said geometries may be determined as their respective length and inner radius, wherein the flow behaviour

2

$$n = \frac{\ln\left(\frac{\Delta p_2 R_2 L_1}{\Delta p_1 R_1 L_2}\right)}{\ln\left(\left(\frac{R_1}{R_2}\right)^3 \frac{Q_2}{Q_1}\right)}.$$

index may be calculated as:

$$K = \left(\frac{n}{3n+1} \frac{\pi R^3}{Q}\right)^n \frac{\Delta p R}{2L}$$

Further, the consistency may be calculated as: , where $R$, $Q$, $L$, and $\Delta p$ are associated with one of said first or second flow of liquid.

The control unit or an additional controller of the device may further be programmed to compare said calculated values of the consistency and the flow behaviour index with reference values being associated with the liquid flowing through said liquid processing system. It is thus possible to continuously perform quality checks for the liquid product for improving process control.

The device may further comprise an open ended liquid channel being in fluid connection with said first and/or second measurement unit, which channel is configured to be arranged in fluid connection with a pipe of said liquid processing system. Hence, the device may be provided as a stand-alone unit which may be connected to the liquid processing system upon request from the system operator.

The device is configured to form part of said liquid processing system such that said control unit is allowed to determine the consistency and the flow behaviour index in real time for liquid being processed by said liquid processing system. This is advantageous in that the device may always provide accurate values for the rheological properties of the liquid being process, thus allowing instant feedback if the liquid falls outside predetermined properties.

According to a third aspect a liquid processing system is provided, comprising a device according to the second aspect. Said liquid is preferably a food product.

Brief Description of Drawings

The above, as well as additional objects, features, and advantages of the present invention, will be better understood through the following illustrative and nonlimiting detailed description of preferred embodiments of the present invention, with reference to the appended drawings, wherein:

According to a second aspect a liquid processing system is provided, comprising a device according to the first aspect. Said liquid is preferably a food product.

Brief Description of Drawings

The above, as well as additional objects, features, and advantages of the present invention, will be better understood through the following illustrative and nonlimiting detailed description of preferred embodiments of the present invention, with reference to the appended drawings, wherein:

Fig. 1 is a schematic view of a liquid processing system for which a method of using the device may be implemented;
Fig. 2 is a schematic view of a device according to an example not part of the invention;
Fig. 3 is a schematic view of a device according to a further embodiment;
Fig. 4 is a schematic view of a device according to another example not part of the invention; and
Fig. 5 is a schematic view of a method of using the device.

Detailed Description

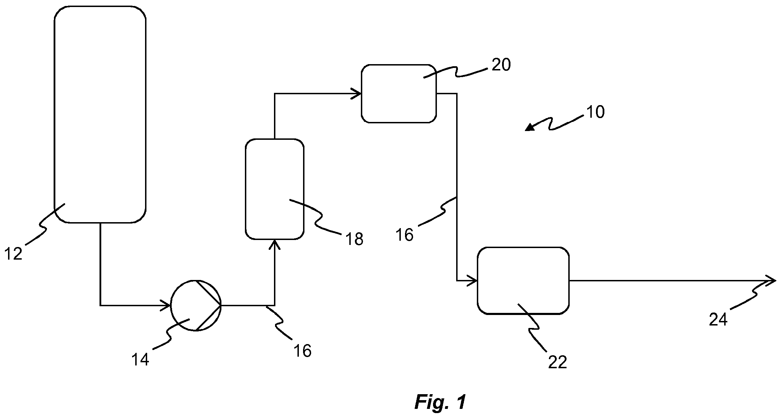

Starting with Fig.1, a liquid processing system 10 is shown which system 10 may be used with a method and a device for determining rheological parameters of the liquid flowing through said system 10. Such method and device will be described in further details below. The liquid processing system 10 may e.g. be a liquid food processing system, but it may also be capable of providing treatment to other liquids such as pharmaceuticals, cosmetics, and/or petroleum, oils, or various liquid polymers.

In order to explain the basic setup of a liquid processing system 10 briefly, an inlet 12 provides a flow of liquid to be processed. The inlet 12 may be a connecting joint to upstream equipment, or a batch tank as indicated in Fig. 1. Normally, a pump 14 is operated to force the liquid out from the inlet 12, through various tubular conduits 16, and further into processing equipment 18, 20, 22 before the liquid exits at the outlet 24. In case of liquid food processing, the outlet 24 may be arranged adjacent to an inlet of a filling machine, whereby the processed food is stored in liquid food packaging containers. The outlet 24 may in other embodiments represent a connection to a yet further batch tank, or other processing equipment arranged downstream of the outlet 24.

The processing equipment 18, 20, 22 may include components such as heaters, coolers, homogenizers, separators, holding cells, mixers, etc. The choice of processing equipment 18, 20, 22 may preferably be selected with respect to the particular liquid product and the desired treatment. For example, should the liquid product be sterilized it is probably necessary to provide some sterilizing equipment such as heaters, UV radiators, etc.

When the liquid is being transported through the liquid processing system 10 it is of high importance to receive input data relating to the actual treatment taking place. Especially in liquid food applications the final quality of the liquid food may vary greatly if one or several treatment processes is not operating as they should. In case of malfunction of a heater configured to pasteurize the liquid food, the final product may have an increased amount of microbiological substances thus leading to shortened storage time or in worst case causing diseases for the consumer.

Monitoring of the treatment steps may be performed by controlling one or several components of the liquid processing system 10. This may be done by providing particular parts of the liquid processing system 10 with specific outputs for transmitting data relating to the current operation of the specific component.

Monitoring may also be done by providing the liquid processing system 10 with one or several sensors, each sensor being configured to measure particular parameters during operation such as temperature, flow, pressure drop, etc. Such monitoring may preferably be done in-line, i.e. in real time without extracting samples of the liquid being process.

Hence, monitoring of the liquid treatment process may be made by in-line sensors for ensuring the desired operation of the liquid processing system, and thus also for ensuring the required quality level of the final liquid product. However, for certain liquids known monitoring principles have proven not to be sufficiently accurate. Such liquids, of which the rheological parameters are of crucial importance for the final product, include for example tooth paste, tomato sauces, custard, shampoo, and various starch suspensions. These liquids are generally denoted as non-Newtonian fluids for which the methods and devices described below are of particular importance.

Before describing specific embodiments of the method and device, some general comments on such non-Newtonian fluids will be given. Non-Newtonian fluids have a rheological behavior that may be represented theoretically by a number of models of which the power-law model is one.

According to the power-law model, the average velocity of a fluid flowing in a circular pipe may be expressed as:

$$v = \left(\frac{\Delta p}{2KL}\right)^{\frac{1}{n}} \frac{n}{3n+1} R^{(n+1)/n} \Rightarrow Q = v\pi R^2 = \frac{n}{3n+1}\pi R^3 \left(\frac{\Delta pR}{2KL}\right)^{\frac{1}{n}},$$

where

$\Delta p$ is the pressure drop across a circular pipe,
$K$ is the consistency,
$L$ is the length of the circular pipe,
$n$ is the fluid behavior index,
$Q$ is the volumetric flow rate,
$R$ is the inner radius of the circular pipe,
$v$ is the mean velocity over the cross sectional area of the circular pipe,
$\dot{\gamma}$ is the shear rate,
$\mu$ is the dynamic viscosity, defined by $\mu = \sigma/\dot{\gamma}$, and
$\sigma$ is the shear stress, defined as $\sigma = K\dot{\gamma}^n$.

In order to describe the actual behavior of the fluid it is advantageous to express the functions for $K$ and $n$, respectively. Hence, the equation above may be rewritten as:

$$K = \left(\frac{n}{3n+1}\frac{\pi R^3}{Q}\right)^n \frac{\Delta pR}{2L}$$

and

$$n = \frac{Q}{\pi R^3}(3n+1)\left(\frac{2KL}{\Delta p R}\right)^{\frac{1}{n}}$$

By providing a two-point measurement, leaving the rheological properties $K$ and $n$ constant, it is possible to rewrite $n$ as:

$$n = \frac{\ln\left(\frac{\Delta p_2 R_2 L_1}{\Delta p_1 R_1 L_2}\right)}{\ln\left(\left(\frac{R_1}{R_2}\right)^3 \frac{Q_2}{Q_1}\right)},$$

where index 1, 2 denotes the particular point of measurement.

From above it is evident that a two-point measurement is necessary for calculating $K$ and $n$. In liquid processing, real time monitoring of $K$ and $n$ has proven to be a very efficient method for quality checks, system performance analysis, processing status checks, etc.

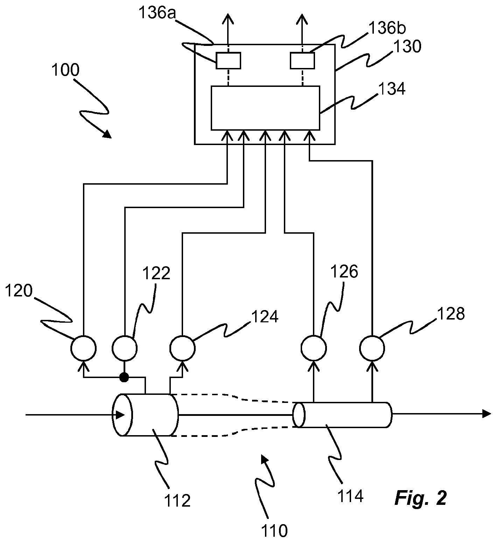

Now turning to Fig. 2 a device 100 for determining the rheological parameters of a liquid is shown. The device 100 includes a tubular conduit 110 for transporting the liquid to be processed. The tubular conduit 110, having a circular cross-section, may form part of the existing liquid processing system 10, or it may be a separate conduit which is connected to the fluid line of the liquid processing system 10 upon measurements.

The tubular conduit 110 includes a first section 112 having a first inner diameter, and a second section 114 having a second diameter. The first and second diameters are different from each other, thus leading to different velocities when the liquid is transported through the tubular conduit 110. During operation, the liquid enters the first section 112 and exits the second section 114 after flowing through the tubular conduit 110.

The first section 112 is provided with one or more sensors 120, 122, 124 for measuring the flow rate and the pressure drop across the first section 112. As shown in Fig. 2, three sensors 120, 122, 124 are provided. The first sensor 120 is configured to measure the volumetric flow rate of the liquid. The second sensor 122 is configured to measure the inlet pressure, while the third sensor 124 is configured to measure the outlet pressure for the first section 112.

The second section 114 is provided with two additional sensors 126, 128 for measuring the pressure at the inlet end and the outlet end of the second section 114.

The sensors 120, 122, 124, 126, 128 may be selected from various available sensors used within liquid processing systems. In a preferred embodiment the two sensors 122, 124 may be provided as a single sensor configured to measure the pressure drop across the first section 112, i.e. a single sensor measuring the difference between inlet pressure and outlet pressure. Similarly, the two sensors 126, 128 may be provided as a single sensor configured to measure the pressure drop across the second section 114, i.e. a single sensor measuring the difference between inlet pressure and outlet pressure.

A control unit 130 is provided for collecting the data from the sensors 120, 122, 124, 126, 128. For this purpose the control unit 130 includes a plurality of input channels of a calculating unit 134, wherein each input channel is associated with a specific sensor 120, 122, 124, 126, 128.

Hence, the calculating unit is connected with the first sensor 120 of the first section 112, whereby the calculating unit 134 receives data corresponding to the volumetric flow rate through the tubular conduit 110.

The calculating unit 134 is further connected with the second and third sensors 122, 124, whereby the calculating unit 134 receives data corresponding to the pressure drop across the first section 112. For this, the calculating unit 134 is configured to calculate the pressure drop from the data of the second and third sensors 122, 124. Optionally, if the pressure drop is measured by a single sensor in accordance with the embodiment described above, the calculating unit 134 is connected to only one sensor for receiving data corresponding to the pressure drop.

The calculating unit 134 is connected with the sensors 126, 128 of the second section 114 whereby the calculating unit 134 receives data corresponding to the pressure drop across the second section 114. For this, the calculating unit 134 is configured to calculate the pressure drop from the data of the sensors 126, 128. Optionally, if the pressure drop is measured by a single sensor in accordance with the embodiment described above, the calculating unit 134 is connected to only one sensor for receiving data corresponding to the pressure drop across the second section.

The calculating unit 134 receives the data values from each sensor 120, 122, 124, 126, 128. The calculating unit 134 further comprises a memory (not shown), either stored within the control unit 130 or arranged remotely and accessed via wired or wireless data communication. The memory stores values corresponding to system constants, such as the radius of the tubular conduit 110 and the length of each section 112, 114. When the calculating unit 134 receives data from the sensors 120, 122, 124, 126, 128 the calculating unit 134 is programmed to fetch the system constants from the memory for calculating the consistency $K$ and the fluid behavior index $n$ according to the formulas given above. Hence, these values are transmitted to two separate outputs 136a, 136b for allowing other components of the liquid processing system 10 to access and analyze these values representing the rheological properties of the liquid being processed by the liquid processing system.

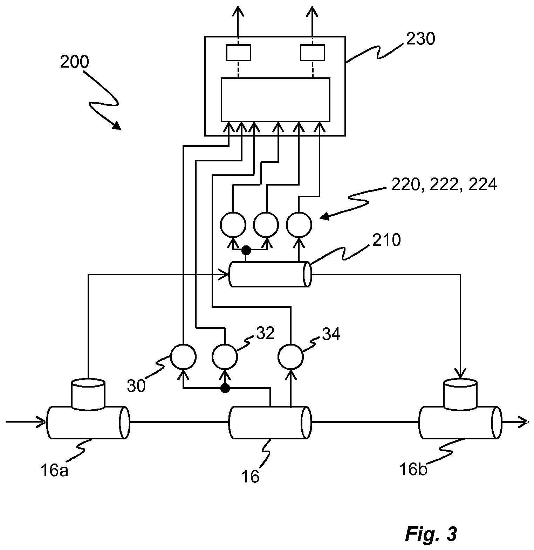

Now turning to Fig. 3, another embodiment of a device 200 will be described. The device 200 includes various sensors for measuring data relating to the pressure drop and the flow rate, and a control unit 230 being equal to the control unit 130 already described with reference to Fig. 2. Hence, the control unit 230 and its input channels, calculating unit, and outputs will not be described further. However, the device 200 differs from the device 100 in specific details relating to the connection to the liquid processing system 10.

The device 200 includes a tubular conduit 210 having a constant diameter, i.e. the cross section of the tubular conduit 210 is constant over its length. The tubular conduit 210 is connected to a pipe 16 of the liquid processing system 10 by means of two branch pipes 16a, 16b. The diameter of the tubular conduit 210 is selected such that it is different from the diameter of the pipe 16 of the liquid processing system 10. In this embodiment, the tubular conduit 210 is equipped with three sensors 220, 222, 224 for measuring the flow rate and the pressure drop across the tubular conduit 210. Hence, the sensor arrangement of the tubular conduit 210 is equal to the sensor arrangement of the first section 112 of the tubular conduit 110 described with reference to Fig. 1.

The piping 16 also includes three sensors 30, 32, 34 for measuring the flow rate and the pressure drop across the piping 16. Hence, the sensor arrangement of the piping 16 is equal to the sensor arrangement of the first section 112 of the tubular conduit 110 described with reference to Fig. 1.

It should be noted that sensors 222, 224, i.e. the pressure sensors provided for measuring the inlet pressure and the outlet pressure of the tubular conduit 210 could be replaced by a single sensor configured to measure the pressure drop directly. The same applies to the sensors 32, 34 being provided for measuring the inlet pressure and the outlet pressure of the pipe 16.

Similarly to what has been described with reference to Fig. 1, the control unit 230 receives data corresponding to the flow rate and the pressure drop of the piping 16, as well as the flow rate and pressure drop of the tubular conduit 210 of the device 200. Hence, the calculating unit of the control unit 230 may calculate the consistency $K$ and the fluid behavior index $n$ of the fluid, as the system constants (i.e. the dimensions of the flow channel) for the piping 16 as well as the tubular conduit 210 are stored in the memory. In this embodiment, the control unit needs to receive the value of the flow rate for the pipe 16 as well as for the tubular conduit 210, since the flow rate may vary between the tubular conduit 210 and the pipe 16.

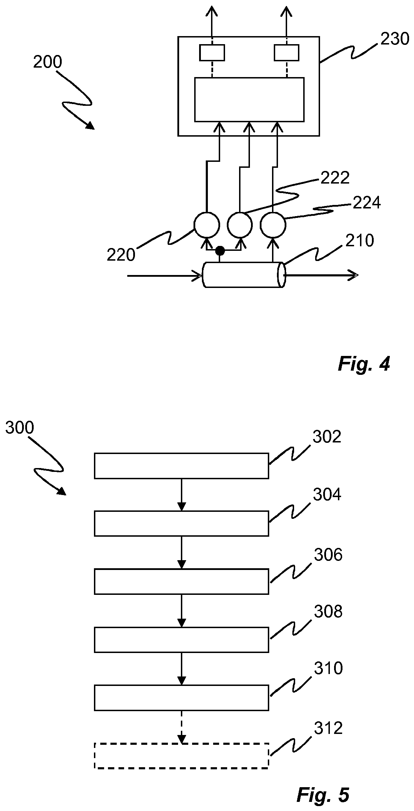

Now turning to Fig. 4 another embodiment is shown. The figure shows a device 200 being identical to the device 200 of Fig. 3, i.e. including a tubular conduit 210, sensors 220, 222, 224 and a control unit 230. The tubular conduit 210 may either form part of the liquid processing system 10 such that the tubular conduit 210 is actually a part of the piping 16, or it may be provided as a separate conduit being connected to the piping 16 via e.g. branch pipes (not shown).

The device 200 operates by measuring the pressure drop and the flow rate at a specific time, and at a second time again measuring the pressure drop and the flow rate across the tubular conduit 210. For these measurement points, the flow rate and thus also the pressure drop must have changed such that the values of the first and second input channels are different from the values of the third and fourth input channels. Hence, by measuring the pressure drop and the flow rate for two different flows of liquid it is possible to calculate the consistency $K$ and the flow behavior index $n$ for the fluid.

For all embodiments described so far, it is necessary to select the process parameters, i.e. the geometries, the pressure drops, and the volumetric flow rates such that the denominator in the formulas above does not equal zero. It is also preferred to design the process such that the numerator in the formulas above does not equal zero.

The device 100, 200 may preferably be used for a number of applications within liquid processing, and in particular for food processing. In order to perform a quality check of the process, the device 100, 200 may be operated to provide actual values of $n$ and $K$. By comparing these values with reference values using an additional controller, such as a controller of the liquid processing system or a further module within the control unit 130, 230, it may be possible to detect any undesired variances in the final product. This may e.g. be the case for ketchup manufacturing, wherein the rheological properties should be within strict intervals for the consumer to experience the expected product quality of the consumer. If the raw material is changed from a first batch of tomatoes to a second batch of tomatoes, wherein the amount of starch is different due to different degree of ripeness, the rheological parameters may change at an amount large enough to render the final product outside consumer expectations.

Since the rheological parameters $n$ and $K$ are dependent on heat treatment, i.e. the temperature and the time for which the product is exposed to such temperature, the device 100, 200 may also be used to verify heat treatment processes by comparing measured values with reference values. Hence, the device 100, 200 may be used for condition monitoring, i.e. for monitoring the actual condition of processing equipment in real time.

Now turning to Fig. 5, a method 300 according to an embodiment will be described. The method comprises a first step 302 of providing a first flow of liquid through a predetermined geometry $R_1, L_1$. The geometry corresponds to a tubular conduit with well defined length and inner radius. In a second step 304, the method determines the flow rate

$Q_1$ through said geometry and the pressure drop $\Delta p_1$ across said geometry $R_1$, $L_1$ for said first flow of liquid using the sensors provided. In a subsequent step 306 a second flow of liquid is provided through a predetermined geometry $R_2$, $L_2$, wherein the geometry corresponds to a tubular conduit with well defined length and inner radius. Step 306 may be performed at the same time as step 302 if the geometries are different. In step 308 the flow rate $Q_2$ through said geometry and the pressure drop $\Delta p_2$ across said geometry $R_2$, $L_2$ is determined for said second flow of liquid. In a final step 310, the method calculates the consistency $K$ and the flow behaviour index $n$ for said liquid using said geometries $R_1$, $R_2$, $L_1$, $L_2$ and the flow rate $Q_1$, $Q_2$ and pressure drop $\Delta p_1$, $\Delta p_2$ for said first and second flow of liquid in accordance with the formulas above.

The method 300 may also comprise an optional step 312 in which the values for $n$ and $K$ are transmitted to a further controller which compares the measured values with reference values for evaluating and/or analysing the current process for the liquid.

The predetermined geometries may preferably represent the length and radius of tubular conduits or pipes having a circular cross section. However, the presented methods and devices may also be implemented for conduits and pipes having a non-circular cross section. For such embodiments the consistency and the flow behaviour index may be calculated by replacing the radius value $R_{1,2}$ by a value corresponding to the hydraulic radius $\check{R}$, which may be expressed as $2\check{R} = \dfrac{4 \cdot cross\ sectional\ area}{perimeter}$. Hence, for a circular tubular conduit the hydraulic radius equals the radius of the circular cross section.

Although the above description has been made mostly with reference to a liquid food processing system, it should be readily understood that the general principle of the method and device is applicable for various different liquid processing systems.

Further, the invention has mainly been described with reference to a few embodiments. However, as is readily understood by a person skilled in the art, other embodiments than the ones disclosed above are equally possible within the scope of the invention, as defined by the appended claims.


**Claims**

1. A device for a liquid processing system (10), comprising a first measurement unit (120, 122, 124, 220, 222, 224) being configured to measure the flow rate ($Q_1$) through a first predetermined geometry ($R_1$, $L_1$) and the pressure drop ($\Delta p_1$) across said geometry ($R_1$, $L_1$) for a first flow of liquid,
   a second measurement unit (126, 128, 220, 222, 224, 30, 32, 34) being configured to measure the flow rate ($Q_2$) through a second predetermined geometry ($R_2$, $L_2$) and the pressure drop ($\Delta p_2$) across said geometry ($R_2$, $L_2$) for a second flow of liquid, and
   a control unit (130, 230) being configured to calculate the consistency ($K$) and the flow behaviour index ($n$) for said liquid using said geometries ($R_1$, $R_2$, $L_1$, $L_2$) and the flow rate ($Q_1$, $Q_2$) and pressure drop ($\Delta p_1$, $\Delta p_2$) for said first and second flow of liquid, **characterized in that**
   a tubular conduit (210) forming the first predetermined geometry ($R_1$, $L_1$) Z is connected to a pipe (16) of the liquid processing system (10) by means of two branch pipes (16a, 16b), the diameter of the tubular conduit (210) being constant and different from the diameter of the pipe (16) of the liquid processing system (10), wherein the pipe (16) forms the second predetermined geometry ($R_2$, $L_2$),
   the tubular conduit (210) is equipped with sensors (220, 222, 224) for measuring the flow rate and the pressure drop across the tubular conduit (210), the sensors (220, 222, 224) forming part of the first measurement unit (120,122,124, 220,222,224),
   the pipe (16) includes sensors (30, 32, 34) for measuring the flow rate and the pressure drop across the pipe (16), the sensors (30, 32, 34) forming part of the second measurement unit (126, 128, 220 222 224, 30, 32, 34),
   the control unit (130, 230) is arranged to receive data corresponding to said flow rates and the pressure drops of the piping (16) and the tubular conduit (210), to thereby calculate the consistency $K$ and the fluid behavior index $n$ of the fluid,
   the device is configured to form part of said liquid processing system (10) such that said control unit (130, 230) is allowed to determine the consistency ($K$) and the flow behaviour index ($n$) in real time for liquid being processed by said liquid processing system (10).

2. The device according to claim 1, wherein said liquid is a non-Newtonian fluid.

3. The device according any one of the preceding claims, wherein said geometries are determined as their respective length ($L$) and inner radius ($R$).

**4.** The device according to any one of the preceding claims, wherein the flow behaviour index ($n$) is calculated as:

$$n = \frac{\ln\left(\dfrac{\Delta p_2 R_2 L_1}{\Delta p_1 R_1 L_2}\right)}{\ln\left(\left(\dfrac{R_1}{R_2}\right)^3 \dfrac{Q_2}{Q_1}\right)}.$$

**5.** The device according to claim 4, wherein the consistency ($K$) is calculated as:

$$K = \left(\frac{n}{3n+1}\frac{\pi R^3}{Q}\right)^n \frac{\Delta p R}{2L}$$

, where $R$, $Q$, $L$, and $\Delta p$ are associated with one of said first or second flow of liquid.

**6.** The device according to any one of the preceding claims, wherein the control unit (130, 230) or an additional controller may further be programmed to compare the step of comparing said calculated values of the consistency ($K$) and the flow behaviour index ($n$) with reference values being associated with the liquid flowing through said liquid processing system.

**7.** A liquid processing system, comprising a device (100, 200) according to any one of claims 1-6.

**8.** The liquid processing system according to claim 7, wherein said liquid is a food product.

**Patentansprüche**

**1.** Vorrichtung für ein Flüssigkeitsbehandlungssystem (10), umfassend
eine erste Messeinheit (120, 122, 124, 220, 222, 224), die konfiguriert ist, um die Strömungsrate ($Q_1$) durch eine erste vorbestimmte Geometrie ($R_1$, $L_1$) hindurch und den Druckabfall ($\Delta p_1$) über der Geometrie ($R_1$, $L_1$) für eine erste Flüssigkeitsströmung zu messen,
eine zweite Messeinheit (126, 128, 220, 222, 224, 30, 32, 34), die konfiguriert ist, um die Strömungsrate ($Q_2$) durch eine zweite vorbestimmte Geometrie ($R_2$, $L_2$) hindurch und den Druckabfall ($\Delta p_2$) über der Geometrie ($R_2$, $L_2$) für eine zweite Flüssigkeitsströmung zu messen, und
eine Steuereinheit (130, 230), die konfiguriert ist, um die Konsistenz ($K$) und den Strömungsverhaltensindex (n) für die Flüssigkeit unter Verwendung der Geometrien ($R_1$, $R_2$, $L_1$, $L_2$) und der Strömungsrate ($Q_1$, $Q_2$) und des Druckabfalls ($\Delta p_1$, $\Delta p_2$) für die erste und die zweite Flüssigkeitsströmung zu berechnen,
**dadurch gekennzeichnet, dass**
eine Rohrleitung (210), welche die erste vorbestimmte Geometrie ($R_1$, $L_1$) bildet, mit einem Rohr (16) des Flüssigkeitsverarbeitungssystems (10) mittels zweier Abzweigrohre (16a, 16b) verbunden ist, wobei der Durchmesser der Rohrleitung (210) konstant ist und sich von dem Durchmesser des Rohrs (16) des Flüssigkeitsverarbeitungssystems (10) unterscheidet, wobei das Rohr (16) die zweite vorbestimmte Geometrie ($R_2$, $L_2$) bildet,
die Rohrleitung (210) mit Sensoren (220, 222, 224) zum Messen der Strömungsrate und des Druckabfalls über der Rohrleitung (210) ausgestattet ist, wobei die Sensoren (220, 222, 224) Teil der ersten Messeinheit (120, 122, 124, 220, 222, 224) bilden,
das Rohr (16) Sensoren (30, 32, 34) zum Messen der Strömungsrate und des Druckabfalls über dem Rohr (16) einschließt, wobei die Sensoren (30, 32, 34) Teil der zweiten Messeinheit (126, 128, 220, 222, 224, 30, 32, 34) bilden,
die Steuereinheit (130, 230) vorgesehen ist, um Daten zu empfangen, die den Strömungsraten und den Druckabfällen des Rohrnetzes (16) und der Rohrleitung (210) entsprechen, um dadurch die Konsistenz $K$ und den Fluidverhaltensindex $n$ des Fluids zu berechnen,
die Vorrichtung konfiguriert ist, um Teil des Flüssigkeitsverarbeitungssystems (10) zu bilden, so dass die Steuereinheit (130, 230) für Flüssigkeit, die durch das Flüssigkeitsverarbeitungssystem (10) verarbeitet wird, die Konsistenz ($K$) und den Strömungsverhaltensindex (n) in Echtzeit bestimmen kann.

**2.** Vorrichtung nach Anspruch 1, wobei die Flüssigkeit ein nicht-newtonsches Fluid ist.

**3.** Vorrichtung nach einem der vorhergehenden Ansprüche, wobei die Geometrien durch ihre jeweilige Länge ($L$) und ihren jeweiligen Innenradius ($R$) bestimmt werden.

**4.** Vorrichtung nach einem der vorhergehenden Ansprüche, wobei der Strömungsverhaltensindex (*n*) wie folgt berechnet wird:

$$n = \frac{\ln\left(\dfrac{\Delta p_2 R_2 L_1}{\Delta p_1 R_1 L_2}\right)}{\ln\left(\left(\dfrac{R_1}{R_2}\right)^3 \dfrac{Q_2}{Q_1}\right)}.$$

**5.** Vorrichtung nach Anspruch 4, wobei die Konsistenz (*K*) wie folgt berechnet wird:

$$K = \left(\frac{n}{3n+1}\frac{\pi R^3}{Q}\right)^n \frac{\Delta p R}{2L},$$

wobei *R, Q, L* und *Δp* einem von der ersten oder zweiten Flüssigkeitsströmung zugeordnet sind,

**6.** Vorrichtung nach einem der vorhergehenden Ansprüche, wobei die Steuereinheit (130, 230) oder eine zusätzliche Steuerung des Weiteren programmiert werden kann, um den Schritt des Vergleichens der berechneten Werte der Konsistenz (*K*) und des Strömungsverhaltensindex (*n*) mit Referenzwerten zu vergleichen, die der Flüssigkeit zugeordnet sind, die durch das Flüssigkeitsverarbeitungssystem strömt.

**7.** Flüssigkeitsverarbeitungssystem, umfassend eine Vorrichtung (100, 200) nach einem der Ansprüche 1 bis 6.

**8.** Flüssigkeitsverarbeitungssystem nach Anspruch 7, wobei die Flüssigkeit ein Nahrungsmittelprodukt ist.

## Revendications

**1.** Dispositif destiné à un système de traitement de liquide (10) et comprenant
une première unité de mesure (120, 122, 124, 220, 222, 224) conçue pour mesurer le débit ($Q_1$) à travers une première géométrie prédéterminée ($R_1$, $L_1$) et la chute de pression ($\Delta p_1$) dans ladite géométrie ($R_1$, $L_1$) pour un premier écoulement de liquide,
une deuxième unité de mesure (126, 128, 220, 222, 224, 30, 32, 34) conçue pour mesurer le débit ($Q_2$) à travers une deuxième géométrie prédéterminée ($R_2$, $L_2$) et la chute de pression ($\Delta p_2$) dans ladite géométrie ($R_2$, $L_2$) pour un deuxième écoulement de liquide, et
une unité de commande (130, 230) conçue pour calculer la consistance (*K*) et l'indice de comportement d'écoulement (*n*) pour ledit liquide à l'aide desdites géométries ($R_1$, $R_2$, $L_1$, $L_2$) et le débit ($Q_1$, $Q_2$) et la chute de pression ($\Delta p_1$, $\Delta p_2$) pour lesdits premier et deuxième écoulements de liquide, **car actérisé en ce que**

un conduit tubulaire (210) formant la première géométrie prédéterminée ($R_1$, $L_1$) est relié à un tuyau (16) du système de traitement de liquide (10) au moyen de deux tuyaux de dérivation (16a, 16b), le diamètre du conduit tubulaire (210) étant constant et différent du diamètre du tuyau (16) du système de traitement de liquide (10), le tuyau (16) formant la deuxième géométrie prédéterminée ($R_2$, $L_2$),
le conduit tubulaire (210) est équipé de capteurs (220, 222, 224) destinés à mesurer le débit et la chute de pression dans le conduit tubulaire (210), les capteurs (220, 222, 224) formant une partie de la première unité de mesure (120, 122, 124, 220, 222, 224),
le tuyau (16) comprend des capteurs (30, 32, 34) destinés à mesurer le débit et la chute de pression dans le tuyau (16), les capteurs (30, 32, 34) formant une partie de la deuxième unité de mesure (126, 128, 220, 222, 224, 30, 32, 34),
l'unité de commande (130, 230) est agencée de manière à recevoir des données correspondant auxdits débits et aux chutes de pression dans le tuyau (16) et le conduit tubulaire (210), afin de calculer la consistance *K* et l'indice de comportement de fluide *n* du fluide,
le dispositif est conçu pour former une partie dudit système de traitement de liquide (10) de sorte que ladite unité de commande (130, 230) permet de déterminer la consistance ($K$) et l'indice de comportement d'écoulement ($n$) en temps réel pour le liquide traité par ledit système de traitement de liquide (10).

2. Dispositif selon la revendication 1, ledit liquide étant un fluide non-newtonien.

3. Dispositif selon l'une quelconque des revendications précédentes, lesdites géométries étant déterminées en fonction de leur longueur ($L$) et de leur rayon intérieur ($R$) respectifs.

4. Dispositif selon l'une quelconque des revendications précédentes, l'indice de comportement d'écoulement ($n$) étant calculé comme suit :

$$n = \frac{ln\left(\frac{\Delta p_2 R_2 L_1}{\Delta p_1 R_1 L_2}\right)}{ln\left(\left(\frac{R_1}{R_2}\right)^3 \frac{Q_2}{Q_1}\right)}$$

5. Dispositif selon la revendication 4, la consistance ($K$) étant calculée comme suit :

$$K = \left(\frac{n}{3n + 1}\frac{\pi R^3}{Q}\right)\frac{\Delta p R}{2L}$$

*R, Q, L,* et *$\Delta p$* étant associés à l'un desdits premier ou deuxième écoulements de liquide.

6. Dispositif selon l'une quelconque des revendications précédentes, l'unité de commande (130, 230) ou un dispositif de commande supplémentaire pouvant en outre être programmé pour comparer l'étape de comparaison desdites valeurs calculées de la consistance ($K$) et l'indice de comportement d'écoulement ($n$) aux valeurs de référence associées au liquide s'écoulant à travers ledit système de traitement de liquide.

7. Système de traitement de liquide, comprenant un dispositif (100, 200) selon l'une quelconque des revendications 1 à 6.

8. Système de traitement de liquide selon la revendication 7, ledit liquide étant un produit alimentaire.

Fig. 1

Fig. 2

*Fig. 3*

*Fig. 4*

*Fig. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2420818 A2

- CN 203132951 U